# EUROPÄISCHE PATENTSCHRIFT

(11) **EP 4 064 940 B1**
(45) Veröffentlichungstag und Bekanntmachung des Hinweises auf die Patenterteilung: **25.02.2026**
(21) Anmeldenummer: 20810980.1
(22) Anmeldetag: 25.11.2020
(51) Int. Cl.: A47B 87/00, A47B 87/02, E04G 7/30, E04G 7/34

(54) **TRAVERSENSATZ UND MÖBELBAUSATZ**
CROSSMEMBER SET, AND FURNITURE KIT
ENSEMBLE TRAVERSE ET KIT DE MEUBLES

(30) Priorität: 25.11.2019 CH 14862019
(43) Veröffentlichungstag der Anmeldung: 05.10.2022
(73) Patentinhaber: Vitra AG, 4127 Birsfelden (CH)
(72) Erfinder: KELLER, Stefan, 79585 Steinen - Hofen (DE); SCHÜTT, Helmut, 79379 Mülllheim - Hügelheim (DE)
(74) Vertreter: Latscha Schöllhorn Partner AG
(86) Internationale Anmeldenummer: PCT/EP2020/083388
(87) Internationale Veröffentlichungsnummer: WO 2021/105226

(56) Entgegenhaltungen:
- FR-A1- 2 984 430
- US-A- 2 665 950

## Beschreibung

### Technisches Gebiet

Die Erfindung betrifft einen Traversensatz mit zumindest zwei Traversen und einen Möbelbausatz mit dem Traversensatz.

Solche Traversen des Traversensatzes mit einem längsförmigen Stangenabschnitt, wobei der Stangenabschnitt eine zentrale Längsachse, ein erstes Längsende und ein dem ersten Längende im Wesentlichen entgegengesetztes zweites Längsende aufweist, können zum Aufbauen von Möbeln wie beispielsweise Gestellen und Tischen eingesetzt werden.

### Stand der Technik

Zum flexiblen Zusammenstellen von Möbeln sind Systeme bekannt, bei denen sich aus Grundkomponenten variabel Möbel aufbauen lassen. Gerade in Warengeschäften oder in Büros, wo typischerweise die Möblierung beziehungsweise die Anforderungen an die Möblierung von Zeit zu Zeit ändert, sind variable Möbelbausysteme verbreitet.

Oft basieren bekannte variable Möbelbausysteme auf einer dreidimensionalen tragenden Rohrstruktur, die in unterschiedlicher Weise aufgebaut werden kann. Beispielsweise ist in der EP 0 262 090 A1 eine Möbelstruktur beschrieben, die eine Mehrzahl von über Knotenelemente verbindbaren Rohren aufweist. Mittels der Knotenelemente können in diesem System die Rohre in unterschiedlicher Weise zusammengesetzt werden und damit insbesondere Gestelle in unterschiedlichen Formen erstellt werden. Auch können die verbundenen Rohre mit Sichtblenden und Böden ausgestattet werden, die zwischen den Rohren montiert werden.

Unter anderem in modernen Bürolandschaften besteht heutzutage zunehmend ein Bedürfnis danach, die Möblierung oft und umfassend anzupassen. Bekannte Möbelbausysteme sind dabei trotz ihrer Variabilität nachteilig, da sie aufwendig zerlegt und wieder neu aufgebaut werden müssen. Typischerweise wird dieser Umbau von geschulten Personen unter Einsatz von Spezialwerkzeug vorgenommen. Dies ist unter anderem aus Sicherheitsgründen erforderlich, da das Möbelbausystem gewährleisten muss, dass mit ihm erstellte Möbel ausreichend stabil sind. Eine unstabile Möblierung kann eine erhebliche Gefährdung von Personen nach sich ziehen, insbesondere bei vergleichsweise hohen und/oder stark beladenen Möbeln.

Da mit den bekannten Möbelbausystemen ein Auf-, Um- und Abbau von Möbeln wie erwähnt aufwendig ist und bei unsachgemässer Ausführung ein Sicherheitsrisiko stellen kann, wird heutzutage häufig davon abgesehen, die Möblierung bei sich ändernden Bedürfnissen anzupassen. Beispielsweise wird bei offenen Bürolandschaften, in denen es sinnvoll sein könnte, die Möblierung projektweise anzupassen, darauf verzichtet, von der Variabilität der Möbelbausysteme Gebrauch zu machen. Ein System, um Gestelle zu erstellen, ist in der FR 2 984 430 A1 beschrieben.

Aufgabe der nachfolgenden Erfindung ist es daher, ein System beziehungsweise Komponenten für ein System vorzuschlagen, mit dem auf einfache Weise, quasi werkzeuglos, flexibel Möbel erstellt und umgebaut werden können. Insbesondere soll das System beziehungsweise die Komponenten ermöglichen, Gestelle und Arbeitstische flexibel, effizient und sicher auf-, um- und abzubauen.

### Darstellung der Erfindung

Die Aufgabe wird erfindungsgemäss durch einen Traversensatz mit zumindest zwei Traversen, wie er im unabhängigen Anspruch 1 definiert ist, sowie durch einen Möbelbausatz, wie er im unabhängigen Anspruch 8 definiert ist. Vorteilhafte Ausführungsvarianten der Erfindung ergeben sich aus den abhängigen Ansprüchen.

Das Wesen der Erfindung besteht im Traversensatz mit zumindest zwei Traversen mit den technischen Merkmalen des Anspruchs 1.

Der Begriff "Traverse" bezieht sich im Zusammenhang mit der Erfindung auf ein weitgehend längsförmiges Bauteil, das dazu geeignet sein kann, zwischen zwei anderen Bauteilen angeordnet zu werden und dadurch diese beiden anderen Bauteile miteinander zu verbinden und zu stabilisieren. Insbesondere kann die Traverse ein mechanischer Träger sein, der zur Stabilisierung, Befestigung und/oder Verbindung dient. Die Traverse kann auch als Balken oder Querbalken bezeichnet werden.

Der Stangenabschnitt der Traverse kann als massives oder insbesondere hohles Stangenprofil beispielsweise in Form eines Rohrs mit einem beliebigen Querschnitt ausgestaltet sein. Insbesondere kann er ein Rohr mit einem kreisförmigen oder vieleckigen Querschnitt sein.

Der Begriff "zentrale Längsachse" bezieht sich in Bezug auf den Stangenabschnitt auf eine gerade Achse, die sich durch den Mittelpunkt eines Querschnitts des Stangenabschnitts entlang des Stangenabschnitts erstreckt. Bei einem Stangenabschnitt mit kreisförmigem Querschnitt verläuft die zentrale Längsachse durch den Kreismittelpunkt des Querschnitts. Bei einem Stangenabschnitt, der einen zumindest teilweise kreissegmentförmigen Querschnitt aufweist, kann die zentrale Längsachse durch den Mittelpunkt des Kreissegments verlaufen.

Indem der Umgreifabschnitt der ersten Einrastklaue in Bezug auf die zentrale Längsachse des Stangenabschnitts zum Umgreifabschnitt der zweiten Einrastklaue versetzt ist, können zwei identische Traversen so am gleichen stangenförmigen Element montiert werden, dass sie sich in einer Linie befinden beziehungsweise dass ihre zentralen Längsachsen auf einer Geraden liegen. Auf diese Weise können Möbel wie beispielsweise Gestelle effizient und platzsparend aufgebaut werden. Auch andere dreidimensionale Rohrkonstruktionen wie beispielsweise Gerüste können so effizient aufgebaut werden.

Der Begriff "Möbel" im Zusammenhang mit der Erfindung bezieht sich auf Einrichtungsgegenstände vorwiegend in Innenräumen wie Wohnungen, Geschäften, Büroräumen oder anderen Nutzungseinheiten. Typischerweise sind Möble beweglich und stehen somit im Gegensatz zu unbeweglichen Gegenständen (Immobilien), die mit dem Boden oder baulichen Anlagen fest verbunden sind. In den meisten Fällen haben Möbel einen vorbestimmten Zweck und sind für eine bestimmte Nutzung vorgesehen. Typische Möbel können Tische, Stühle, Regale, Ablagen und dergleichen sein.

Vorzugsweise sind die erste Einrastklaue und die zweite Einrastklaue jeweils mit einem Federelement und einem Schieber ausgestattet, wobei der Schieber zwischen einer Sperrstellung und einer Offenstellung bewegbar ist und das Federelement den Schieber in die Sperrstellung drückt.

Der Begriff "Sperrstellung" kann sich im Zusammenhang mit dem Schieber auf eine Position des Schiebers beziehen, in der er zusammen mit dem zugehörigen Umgreifabschnitt das rohrförmige Element so umgibt, dass die Traverse am rohrförmigen Element befestigt ist. Im Gegensatz dazu kann sich der Begriff "Offenstellung" in Bezug auf den Schieber darauf beziehen, dass er zum Umgreifabschnitt so bewegt ist, dass die Einrastklaue vom rohrförmigen Element entfernt werden kann.

Indem die Feder den Schieber in die Sperrstellung drückt, kann erreicht werden, dass die Einrastklaue geschlossen ist, wenn sie nicht aktiv geöffnet wird, indem der Schieber mit Kraft verschoben wird. Dadurch kann ein sicheres Verbinden der Traverse am stangenförmigen Element erreicht werden. Insbesondere kann ein unbeabsichtigtes Lösen der Einrastklaue vom stangenförmigen Element vermieden werden.

Dabei ist der Schieber der ersten Einrastklaue vorzugsweise in Bezug auf die zentrale Längsachse des Stangenabschnitts zum Schieber der zweiten Einrastklaue versetzt. Indem der Schieber der ersten Einrastklaue in Bezug auf die zentrale Längsachse des Stangenabschnitts zum Schieber der zweiten Einrastklaue versetzt ist, können zwei identische Traversen so am gleichen stangenförmigen Element montiert werden, dass sie sich in einer Linie befinden beziehungsweise dass ihre zentralen Längsachsen auf einer Geraden liegen, ohne dass die Schieber unzweckmässig klein dimensioniert sein müssen. Insbesondere können die Schieber so lang ausgebildet sein, dass sie das rohrförmige Element ausreichend umgreifen, um eine sichere Montage der Einrastklaue zu gewährleisten.

Die Schieber der ersten Einrastklaue und der zweiten Einrastklaue weisen bevorzugt jeweils eine Betätigungsfläche auf, die gegen das stangenförmige Element drückt, wenn die Einrastklaue am stangenförmigen Element montiert wird, so dass der Schieber entgegen dem Drücken des Federelements in die Offenstellung bewegt wird. Eine solche Betätigungsfläche ermöglicht ein effizientes und (halb)automatisches Öffnen der Einrastklauen beim Montieren der Traverse.

Dabei definieren die Umgreifabschnitte der ersten Einrastklaue und der zweiten Einrastklaue vorzugsweise jeweils eine Montagerichtung, in die sie zur Montage an das stangenförmige Element zu bewegen sind, und die Betätigungsflächen der Schieber der ersten Einrastklaue und der zweiten Einrastklaue sind geneigt zur Montagerichtung liegend ausgebildet. Dies ermöglicht ein besonders effizientes Öffnen der Einrastklauen beim Montieren mit einer konstruktiv vergleichsweise einfachen Ausgestaltung.

Vorzugsweise sind die Umgreifabschnitte der ersten Einrastklaue und der zweiten Einrastklaue jeweils dazu ausgebildet, das stangenförmige Element um mehr als einen Viertel und maximal zur Hälfte zu umgreifen. Mit so ausgebildeten Einrastklauen können stangenförmige Elemente ausreichend umgriffen werden, um ein sicheres Halten zu ermöglichen. Gleichzeitig kann so eine effiziente Montage der Einrastklaue am stangenförmigen Element ermöglicht werden.

Vorzugsweise umfassen die Umgreifabschnitte der ersten Einrastklaue und der zweiten Einrastklaue jeweils zwei beabstandete Umgreiffinger. Solche Umgreiffinger ermöglichen, dass das stangenförmige Element verhältnismässig breit gegriffen wird und trotzdem ein Anordnen mehrerer Traversen an einem einzigen stangenförmigen Element in einer Linie möglich ist.

Die Erfindung betrifft einen Traversensatz mit zumindest zwei Traversen wie oben beschrieben. Die zwei Traversen sind so an einem einzigen stangenförmigen Element montierbar, dass die zentralen Längsachsen der Stangenabschnitte der zwei Traversen auf einer Gerade liegen.

Mit dem erfindungsgemässen Traversensatz können die oben im Zusammenhang mit der erfindungsgemässen Traverse und seinen bevorzugten Ausführungsformen beschriebenen Effekte und Vorteile effizient erreicht werden.

Dabei umfassen die Umgreifabschnitte der ersten Einrastklaue und der zweiten Einrastklaue jeder der zwei Traversen wie oben beschrieben jeweils zwei beabstandete Umgreiffinger, die nebeneinander liegen, wenn die zwei Traversen am einzigen stangenförmigen Element montiert sind. Insbesondere können sie abwechselnd nebeneinander liegen, sodass immer ein Umgreiffinger einer der Traversen zwischen zwei Umgreiffinger der anderen der Traversen liegt.

Ein weiterer anderer Aspekt der Erfindung betrifft einen Möbelbausatz mit einem Traversensatz wie vorstehen beschrieben, einem Satz Bodenleitern und einem Satz längsförmiger Windverbände.

Die Bodenleitern umfassen jeweils zwei über eine obere Sprosse also oberes rohrförmiges Element und eine untere Sprosse als unteres rohrförmiges Element miteinander verbundene Vertikalstützen. Die zwei Vertikalstützen sind jeweils mit einem Fuss zum Aufstellen auf einen Boden ausgestattet.

Die Windverbände sind jeweils an ihren Längsenden mit einer Schelle ausgestattet, die dazu ausgebildet sind, an einer der Sprossen einer der Bodenleitern montiert zu werden, indem sie die eine der Sprossen umgreift.

Die Einrastklauen der zumindest zwei Traversen des Traversensatzes sind jeweils so ausgebildet, dass eine der Sprossen der Bodenleitern beziehungsweise einer der Stangenabschnitte der zumindest zwei Traversen des Traversensatzes das stangenförmige Element ist. So dimensionierte Traversen können natürlich auch an den unteren Sprossen der ersten und zweiten Bodenleitern montiert werden. In ähnlicher Weise können so dimensionierte Windverbände natürlich auch an der oberen der zweiten der Bodenleitern und der unteren der ersten der Bodenleitern montiert sein.

Der Möbelbausatz kann dazu vorgesehen sein, dass nach Bedarf flexibel unterschiedliche Möbel aus den gleichen Bauteilen aufgebaut werden können. Dabei können solche Möbel beispielsweise Regale, Gestelle oder Tische sein. Insbesondere können die Möbel Büromöbel sein. Die Bauteile des Möbelbausatzes sind mit Vorteil so dimensioniert, dass Möbel mit vergleichsweise wenig Bauteilen zusammengebaut werden können. Beispielsweise kann ein stabiler Tisch aus zwei Bodenleitern, zwei Traversen, einem Windverband und einem Plattenelement, wie es weiter unten detaillierter beschrieben ist, zusammengebaut werden.

Der Begriff "Satz" im Zusammenhang mit dem Möbelbausatz und dessen Bodenleitern, Traversen und Windverbände bezieht sich auf eine Mehrzahl von Elementen beziehungsweise Bauteilen. So umfasst beispielsweise der Satz Bodenleitern zwei oder mehr Bodenleitern.

Mit Vorteil weist der Stangenabschnitte der Traverse die im Wesentlichen gleiche Form beziehungsweise gleichen Querschnitt auf wie die Sprossen der Bodenleitern. So können die Einrastklauen sowohl an den Sprossen der Bodenleitern als auch an den Traversen montiert werden.

Die Bodenleitern können neben der oberen und der unteren Sprosse auch noch weitere Sprossen umfassen. Diese weiteren Sprossen können sich oberhalb der oberen Sprosse, unterhalb der unteren Sprosse und/oder zwischen der oberen und der unteren Sprosse befinden.

Typischerweise sind die Vertikalstützen und die Sprossen im Wesentlichen stangenförmig ausgebildet. Insbesondere die Sprossen aber auch die Vertikalstützen können einen im Wesentlichen runden beziehungsweise kreisförmigen Querschnitt aufweisen. Die Vertikalstützen und die Sprossen einer Bodenleiter können jeweils quasi rechtwinklig zueinander stehen, sodass die Sprossen parallel zueinander und die Vertikalstützen parallel zueinander verlaufen.

Die Vertikalstützen der Bodenleitern können über weite Strecken als Stangenprofile beziehungsweise beispielsweise runde oder vierkantige Rohre ausgebildet sein. Sie sind typischerweise aus einem robusten Material wie einem Metall hergestellt. Die Vertikalstützen einer Bodenleiter verlaufen vorteilhafterweise parallel zueinander.

Die Sprossen der Bodenleitern können ebenfalls über weite Strecken als Stangenprofile beziehungsweise Rohre ausgebildet sein. Vorteilhafterweise weisen sie einen Umfang mit einem quasi kreisförmigen Querschnitt auf. Die obere und die untere Sprosse sind im Gebrauch typischerweise horizontal ausgerichtet und verlaufen parallel zueinander. Die Sprossen sind bevorzugt aus dem gleichen Material hergestellt wie die Vertikalstützen.

Die Füsse der Bodenleitern können so geformt sein, dass sie direkt auf den Boden stellbar sind. Alternativ dazu können sie dazu ausgestaltet sein, mit einem zum Aufstellen geeigneten Element wie beispielsweise Gleitern ausgestattet zu werden. Falls ein häufiges Verschieben des aus dem Möbelbausatz erstellten Möbels beabsichtigt ist, können auch Rollen als Füsse der Bodenleitern eingesetzt werden. Die Füsse können auch höhenverstellbar sein, um ein einfaches Ausrichten eines erzeugten Möbels zu ermöglichen.

Der erfindungsgemässe Möbelbausatz ermöglicht den effizienten und flexiblen Aufbau von Möbeln nach den Bedürfnissen der Nutzer. Dabei können die Nutzer die Möbel ohne Werkzeuge oder mit einfachen Standardwerkzeugen vergleichsweise einfach zusammengebauten. Eine Fachperson ist für den Aufbau nicht notwendig. Auch kann auf den Einsatz von Spezialwerkzeug verzichtet werden.

Insbesondere kann durch das Vorsehen von Traversen und Windverbänden zum Verbinden der Bodenleitern eine äusserst stabile Konstruktion mit einfachen Mitteln und unter Einsatz von vergleichsweise wenigen Bauteilen erreicht werden. Beispielsweise können zwei Bodenleitern an ihren oberen oder unteren Sprossen über zwei Traversen und gleichzeitig zwischen oberer Sprosse der einen Bodenleiter und unteren Sprosse der anderen Bodenleiter über einen Windverband miteinander verbunden werden. Die Traversen sind so also horizontal ausgerichtet und der Windverband diagonal beziehungsweise schräg. Auf diese Weise ist der Verbund von Bodenleitern, Traversen und Windverband in allen Richtungen im Raum fixiert und stabilisiert. Dies kann einen sicheren Aufbau gewährleisten, der auch für eine vergleichsweise hohe Belastung vorgesehen sein kann.

Dabei ist es durch das Ausstatten der Traversen mit den Einrastklauen möglich, dass die Traversen einfach und sicher mit den Sprossen verbunden werden. Beispielsweise können sie von oben her auf die Sprossen gedrückt werden und so auf die Sprossen einrasten, dass diese Teilweise umgriffen werden.

Durch das Ausstatten der Windverbände mit den Schellen kann erreicht werden, dass die Sprossen umgriffen sind. Damit können die Sprossen auch bei schräger Ausrichtung des Windverbands fest vom Windverband gehalten sein. Ein Verwinden der beiden Bodenleitern kann auf diese Weise sicher verhindert werden. Aus Sicherheitsgründen können die Schellen so ausgebildet sein, dass sie sich nur mit einem Schlüssel oder einem einfachen Werkzeug wie einem Schraubenzieher öffnen lassen. Damit kann ein irrtümliches Öffnen der Schellen vermieden werden.

Auch ein Abbau und ein Umbau eines aus dem erfindungsgemässen Möbelbausatz aufgebauten Möbels sind effizient möglich. Beispielsweise können an bestehende Aufbauten in einfacher Weise weitere Bodenleitern mit Traversen und Windverbänden angehängt werden. So kann ein Möbel nach Bedarf ausgebaut werden. Auch ein Rückbau beziehungsweise Abbau des Möbels ist in analoger Weise effizient und sicher möglich.

Der erfindungsgemässe Möbelbausatz ermöglicht es also, auf einfache Weise, quasi werkzeuglos, flexibel Möbel zu erstellen und umzubauen. Die Möbel können dabei robust sein und ausreichend Sicherheit bieten, dass sie beispielsweise für Büros oder Verkaufsgeschäfte geeignet sind. Insbesondere ermöglicht es der Möbelbausatz, Gestelle und Arbeitstische flexibel, effizient und sicher auf-, um- und abzubauen.

Vorzugsweise sind die Stangenabschnitte der zumindest zwei Traversen jeweils so geformt, dass die Einrastklauen der zumindest Traversen werkzeuglos an ihm montiert werden können. Auf diese Weise können Möbel wie beispielsweise Gestelle effizient und platzsparend aufgebaut werden, die rechtwinklig zueinander stehende Strukturen aufweisen.

### Kurze Beschreibung der Zeichnungen

Weitere vorteilhafte Ausgestaltungen der Erfindung ergeben sich aus der nachfolgenden Beschreibung von Ausführungsbeispielen der Erfindung mithilfe der schematischen Zeichnung. Insbesondere werden im Folgenden die erfindungsgemässe Traverse, der erfindungsgemässe Traversensatz und der erfindungsgemässe Möbelbausatz unter Bezugnahme auf die beigefügten Zeichnungen anhand von Ausführungsbeispielen detaillierter beschrieben. Es zeigen:
- Fig. 1: eine Ansicht von vorne an eine Bodenleiter eines Ausführungsbeispiels eines erfindungsgemässen Möbelbausatzes, der ein Ausführungsbeispiel eines erfindungsgemässen Traversensatzes mit einem Ausführungsbeispiel einer erfindungsgemässen Traverse umfasst;
- Fig. 2: eine Ansicht von vorne an eine Aufbauleiter des Möbelbausatzes von Fig. 1 mit einem Rohrverbinder der Rohrverbindungsstruktur von Fig. 1;
- Fig. 3: eine Ansicht von oben auf eine Traverse des Möbelbausatzes von Fig. 1;
- Fig. 4: eine Ansicht von der Seite an eine Einrastklaue der Traverse von Fig. 3 in einer Sperrstellung beziehungsweise einem geschlossenen Zustand;
- Fig. 5: eine Ansicht von der Seite an die Einrastklaue von Fig. 4 in einer Offenstellung beziehungsweise einem offenen Zustand;
- Fig. 6: eine Ansicht von oben auf die Einrastklaue von Fig. 4 in der Sperrstellung;
- Fig. 7: eine Ansicht von unten an die Einrastklaue von Fig. 4 in der Sperrstellung;
- Fig. 8: eine Ansicht von vorne an einen Windverband des Möbelbausatzes von Fig. 1;
- Fig. 9: eine Ansicht von oben auf den Windverband von Fig. 5;
- Fig. 10: eine perspektivische Ansicht einer Schelle des Windverbands von Fig. 5;
- Fig. 11: eine perspektivische Ansicht einer aus dem Möbelbausatz von Fig. 1 aufgebauten Gestellkonstruktion; und
- Fig. 12: eine Sicht auf ein Detail der Gestellkonstruktion von Fig. 11.

### Weg(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen", "nach aussen" "unterhalb", "oberhalb", "links", "rechts" oder ähnliche werden zur Beschreibung der Anordnung bezeichneter Teile zueinander, der Bewegung bezeichneter Teile zueinander und der Richtungen hin zum oder weg vom geometrischen Mittelpunkt der Erfindung sowie benannter Teile derselben wie in den Fig. dargestellt verwendet. Diese räumlichen Relativangaben umfassen auch andere Positionen und Ausrichtungen als die in den Fig. dargestellten. Zum Beispiel wenn ein in den Fig. dargestelltes Teil umgedreht wird, sind Elemente oder Merkmale, die als "unterhalb" beschrieben sind, dann "oberhalb". Die Terminologie umfasst die oben ausdrücklich erwähnten Wörter, Ableitungen von denselben und Wörter ähnlicher Bedeutung.

Um Wiederholungen in den Fig. und der zugehörigen Beschreibung der verschiedenen Aspekte und Ausführungsbeispiele zu vermeiden, sollen bestimmte Merkmale als gemeinsam für verschieden Aspekte und Ausführungsbeispiele verstanden werden. Das Weglassen eines Aspekts in der Beschreibung oder einer Fig. lässt nicht darauf schliessen, dass dieser Aspekt in dem zugehörigen Ausführungsbeispiel fehlt. Vielmehr kann ein solches Weglassen der Klarheit und dem Verhindern von Wiederholungen dienen. In diesem Zusammenhang gilt für die gesamte weitere Beschreibung folgende Festlegung: Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind ausserdem im unmittelbar zu einer Figur gehörigen Beschreibungstext Bezugszeichen erwähnt, die in der zugehörigen Figur nicht enthalten sind, so wird auf die vorangehenden und nachstehenden Figuren verwiesen. Ähnliche Bezugszeichen in zwei oder mehreren Fig. stehen für ähnliche oder gleiche Elemente.

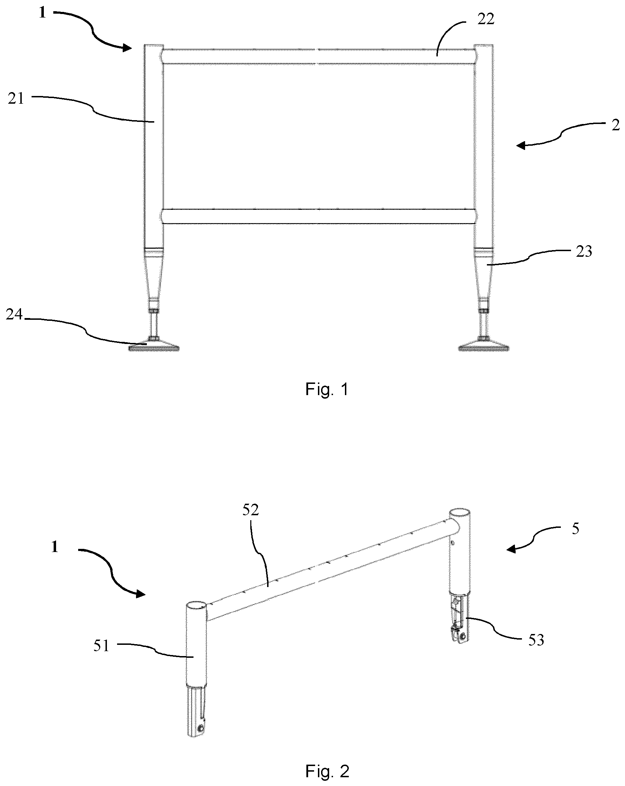

Fig. 1 zeigt eine Bodenleiter 2 eines Satzes Bodenleitern 2 eines Ausführungsbeispiels eines erfindungsgemässen Möbelbausatzes 1. Die Bodenleiter 2 ist als erstes Bauteil eines Ausführungsbeispiels einer erfindungsgemässen Rohrverbindungsstruktur ausgebildet. Sie besteht aus zwei parallelen Vertikalstützen 21, die durch zwei horizontale Sprossen 22 miteinander verbunden sind. Die Sprossen 22 sind als gerade Rohre mit einem kreisförmigen Querschnitt ausgebildet. Sie stehen in einem rechten Winkel zu den Vertikalstützen 21 und sind mit diesen fest verbunden wie beispielsweise verschweisst. Die Vertikalstützen 21 sind ebenfalls grösstenteils als gerade Rohre mit kreisförmigem Querschnitt ausgebildet und gehen nach unten jeweils in einen sich verjüngenden Fuss 23 über. Die beiden Füsse 23 sind jeweils mit einem Gleiter 24 ausgestattet, der zum Aufstellen der Bodenleiter 2 auf dem Boden angeordnet wird.

In Fig. 2 ist eine einsprossige Aufbauleiter 5 eines Satzes Aufbauleitern 5 des Möbelbausatzes 1 gezeigt. Die Aufbauleiter 5 ist als zweites Bauteil eines Ausführungsbeispiels einer erfindungsgemässen Rohrverbindungsstruktur ausgebildet. Sie umfasst zwei rohrförmige Vertikalstützen 51, die über eine rohrförmige Sprosse 52 fest miteinander verbunden sind. Zusammen sind die Vertikalstützen 51 und die Sprosse 52 quasi U-förmig. Die Sprossen 52 der Aufbauleiter sind gleich dimensioniert wie die Sprossen 22 der Bodenleiter 2 von Fig. 1, sodass die Aufbauleiter 5 zur Bodenleiter 2 passt.

Von den unteren Enden der Vertikalstützen 51 der Aufbauleiter 5 erstreckt sich jeweils ein Rohrverbinder 7 der Rohrverbindungsstruktur vertikal nach unten. Die Rohrerbinder 7 sind so ausgestaltet, dass sie in die Vertikalstützen 21 der Bodenleiter 2 oder in Vertikalstützen 51 einer weiteren Aufbauleiter 5 eingeführt werden können und durch Betätigung die verbundenen Vertikalstützen 21, 51 aneinander fixiert.

Neben der Aufbauleiter 5, wie sie in Fig. 2 gezeigt ist, umfasst der Satz Aufbauleitern 5 des Möbelbausatzes 1 weitere Aufbauleitern mit über zwei parallele Sprossen verbundenen Vertikalstützen. Im Vergleich zur einsprossigen Ausführungsform von Fig. 2 sind diese Aufbauleitern länger beziehungsweise höher ausgebildet.

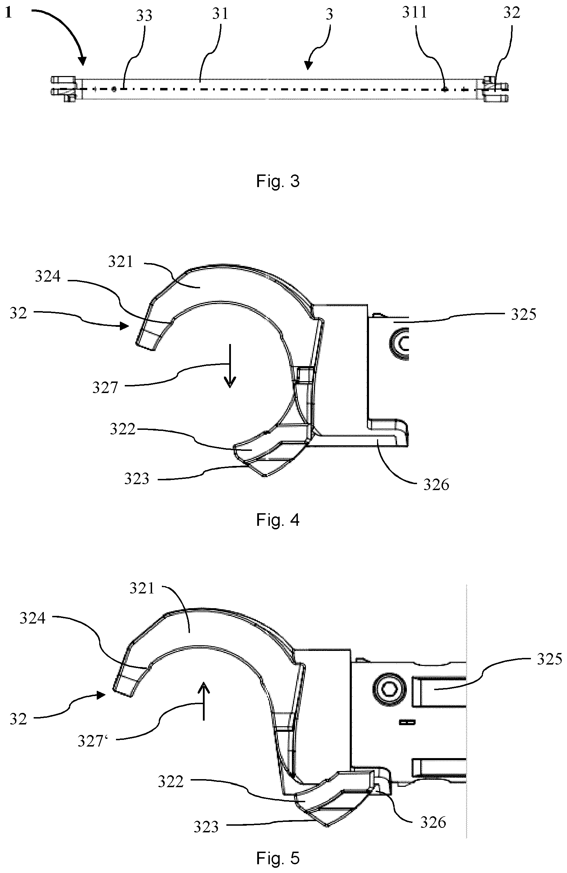

Fig. 3 zeigt eine Traverse 3 eines Satzes von Traversen 3 des Möbelbausatzes 1. Die Traverse 3 ist aus einem längsförmigen Stangenabschnitt 31 und sich jeweils von den Längsenden des Stangenabschnitts 31 links beziehungsweise rechts nach aussen erstreckenden Einrastklauen 32 gebildet. Der Stangenabschnitt 31 ist aus einem Rohr mit einem kreisförmigen Durchmesser geformt, der dem Durchmesser der Sprosse 52 der Aufbauleiter 5 und der Sprossen 22 der Bodenleiter 2 entspricht. Auf seiner Oberseite ist der Stangenabschnitt 31 nahe seiner Längenden jeweils mit einer Bohrung 311 als weibliches Steckteil ausgestattet. Die Einrastklauen 32 umfassen jeweils eine Sprossenaufnahme 321 als Umgreifabschnitt.

Der Stangenabschnitt 31 der Traverse 3 weist eine zentrale Längsachse 33 auf, die sich durch den Mittelpunkt des kreisförmigen Querschnitts des Stangenabschnitts 31 erstreckt. Wie in Fig. 3 ersichtlich ist, ist die Sprossenaufnahme 321 der linken Einrastklaue 32 in Bezug auf die zentrale Längsachse 33 des Stangenabschnitts 31 zur Sprossenaufnahme 321 der rechten Einrastklaue 32 versetzt. Insbesondere ist in Fig. 3 die Sprossenaufnahme 321 der linken Einrastklaue 32 in Bezug auf die zentrale Längsachse 33 nach oben hin versetzt und die Sprossenaufnahme 321 der rechten Einrastklaue 32 in Bezug auf die zentrale Längsachse 33 nach unten hin.

In Fig. 4 ist beispielhaft die linke der beiden Einrastklauen 32 der Traverse 3 von Fig. 3 vergrössert dargestellt. Dabei ist ersichtlich, dass die Einrastklaue 32 eine einstückig mit einer Basis 325 ausgebildete, obere Sprossenaufnahme 321 aufweist und einen unteren Schieber 322. Die Sprossenaufnahme 321 hat eine fast halbkreisbeziehungsweise halbringförmige Innenfläche, die im Wesentlichen entsprechend zu den Sprossen 22, 52 der Boden- und Aufbauleitern 2, 5 geformt ist. In analoger Weise ist der Schieber 322 mit einer etwa viertelkreis- beziehungsweise viertelringförmigen Innenfläche ausgestattet, die ebenfalls im Wesentlichen entsprechend zu den Sprossen 22, 52 der Boden- und Aufbauleitern 2, 5 geformt ist. An den Innenflächen der Sprossenaufnahme 321 und des Schiebers 322 sind drei Kontaktwölbungen 324 gleichmässig entlang des Umfangs verteilt.

Der Schieber 322 erstreckt sich durch einen Führungsschlitz 326 der Basis 325 hindurch, sodass er in einem vordefinierten Umfang nach links und rechts zur Basis 325 verschiebbar ist. Im Innern der Basis 325 ist die Einrastklaue 32 mit einer Feder ausgestattet, die den Schieber 322 in die in Fig. 4 gezeigte Position maximal nach links drückt. In dieser Sperrstellung ist die Einrastklaue 32 an einer Sprosse 22, 52 oder einem Stangenabschnitt 31 einer anderen Traverse 3 eingerastet, wenn die Sprossenaufnahme 321 und der Schieber 322 diese(n) aufnimmt. Die Traverse 3 ist dann an der Sprosse 22, 52 beziehungsweise dem Stangenabschnitt 31 montiert. Insbesondere liegt die Sprosse 22, 52 beziehungsweise der Stangenabschnitt 31 an den drei Kontaktwölbungen 324 im Sinne einer Dreipunktverbindung an, sodass die Sprosse 22, 52 beziehungsweise der Stangenabschnitt 31 sicher gehalten ist und ein Verkanten verhindert werden kann.

Wie in der Fig. 5 dargestellt ist, wird zum Lösen der Einrastklaue 32 der Schieber 322 beispielsweise manuell entgegen der Federkraft entlang des Führungsschlitzes 326 nach rechts gedrückt. Dadurch wird die Einrastklaue 32 geöffnet und die Traverse 3 kann von der Sprosse 22, 52 in einer Demontagerichtung 327' nach oben entfernt werden. Insbesondere befindet sich die Einrastklaue 32 im in der Fig. 5 dargestellten Zustand in einer Offenstellung. Auf diese Weise kann die Traverse 3 effizient werkzeuglos demontiert und ein aus dem Möbelbausatz 1 erstelltes Möbel ab- oder umgebaut werden.

Zum Montieren der Traverse 3 an einer Sprosse 22, 52 beziehungsweise an einem Stangenabschnitt 31 einer anderen Traverse 3 wird die Einrastklaue 32 von oben her in einer quasi vertikalen Montagerichtung 327 auf die Sprosse 22, 52 oder den Stangenabschnitt 31 gedrückt. Durch die als Betätigungsfläche 323 ausgestaltete, abgeschrägte beziehungsweise angewinkelte Unterseite des Schiebers 322 wird dieser dabei entgegen der Federkraft nach rechts gedrückt, sodass die Sprossenaufnahme 321 die Sprosse 22, 52 beziehungsweise den Stangenabschnitt 31 aufnehmen kann. Getrieben von der Feder schnappt der Schieber 322 dann unterhalb der Sprosse 22, 52 beziehungsweise des Stangenabschnitts 31 wieder ein, sodass eine sichere Befestigung erreicht wird.

Bei einer Montage der Traverse 3 wird die Einrastklaue 32, wie sie in der Fig. 4 gezeigt ist, also in die Montagerichtung 327 auf die Sprosse 22, 52 beziehungsweise den Stangenabschnitt 31 gedrückt. Dadurch wird der Schieber 322 nach rechts gedrückt bis er sich in der in Fig. 5 gezeigten Offenstellung befindet. Wird die Einrastklaue 32 weiter in die Montagerichtung 327 bewegt, wird der Schieber 322 unterhalb der Sprosse 22, 52 beziehungsweise des Stangenabschnitts 31 von der Feder wieder nach links gedrückt, bis sich die Einrastklaue 322 wieder in der in Fig. 4 gezeigten Sperrstellung befindet.

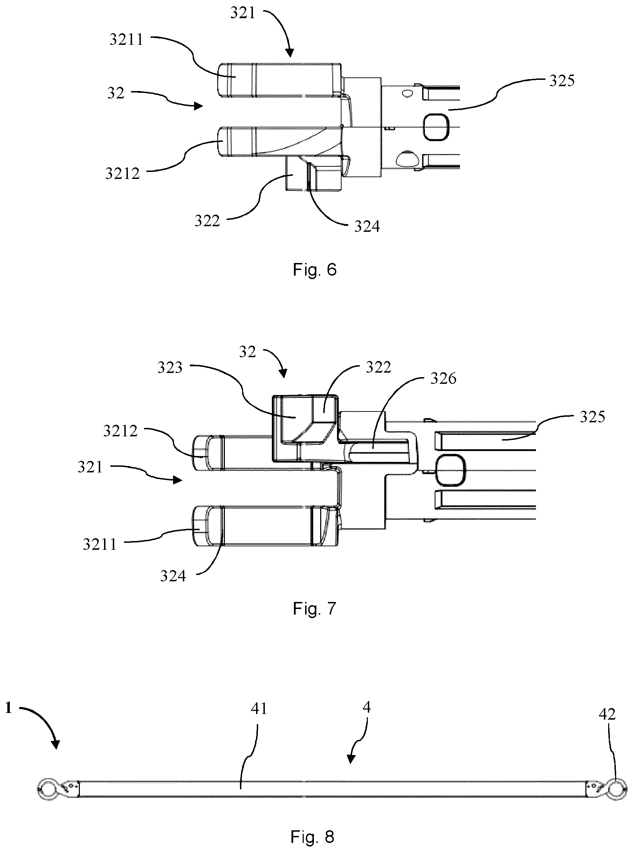

In Fig. 6 ist die Einrastklaue 322 von oben gezeigt. Dabei ist ersichtlich, dass die Sprossenaufnahme 321 einen ersten Umgreiffinger 3211 und einen zweiten Umgreiffinger 3212 aufweist. Der zweite Umgreiffinger 3212 liegt teilweise über dem Schieber 322.

Fig. 7 zeigt die Einrastklaue 322 von unten. Der erste und der zweite Umgreiffinger 3211, 3212 weisen jeweils eine Breite auf, sodass ihre Innenflächen eine ausreichende Auflage auf der Sprosse 22, 52 beziehungsweise dem Stangenabschnitt 31 ermöglichen. Auch die Betätigungsfläche 323 ist ausreichend gross ausgebildet, um während des Montierens einen Druck von der Sprosse 22, 52 beziehungsweise dem Stangenabschnitt 31 aufgenommen und der Schieber 322 dadurch nach rechts gedrückt werden kann.

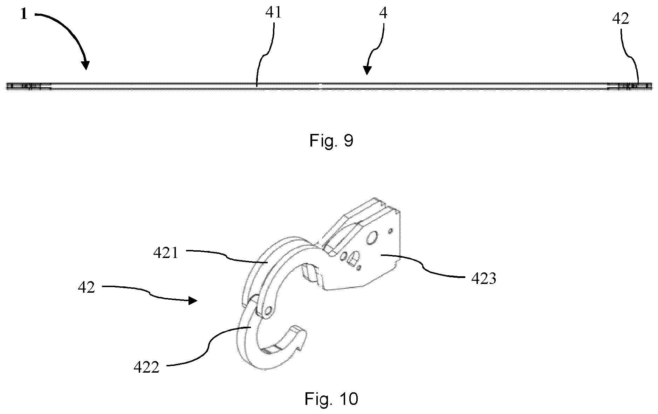

In Fig. 8 ist ein Windverband 4 eines Satzes von Windverbänden 4 des Möbelbausatzes 1 gezeigt. Der Windverband 4 weist einen Stangenabschnitt 41 auf, der an seinen Längsenden jeweils in eine Schelle 42 übergeht. Wie zusammen mit der Fig. 9 ersichtlich ist, ist der Stangenabschnitt 41 als massive Vierkantstange mit einem rechteckigen Querschnitt ausgeführt. Durch die massive Ausführung kann der Windverband besonders robust und zur Aufnahme vergleichsweise grosser Kräfte ausgebildet sein.

Fig. 10 zeigt eine der Schellen 42 des Windverbands 4 in einer geöffneten Stellung. Die Schelle 42 ist handschellenartig mit einer Basis 423, einem oberen Umgreifteil 421 und einem unteren Umgreifteil 422 ausgestattet. Das untere Umgreifteil 422 ist über ein Scharniergelenk schwenkbar am oberen Umgreifteil 421 montiert. In der Basis 423 ist eine Verriegelung angeordnet, die den unteren Umgreifteil 422 fixiert, wenn die Schelle 42 so geschlossen ist, dass sie eine Sprosse 22, 52 umgreift. Insbesondere ist der untere Umgreifteil 422 mit einer Rastnase ausgestattet, der hinter einen gefederten Riegel der Verriegelung greift. Die Sprosse 22, 52 ist so fest gehalten und ein Lösen der Schnalle 42 ohne Betätigung der Verriegelung kann vermieden werden.

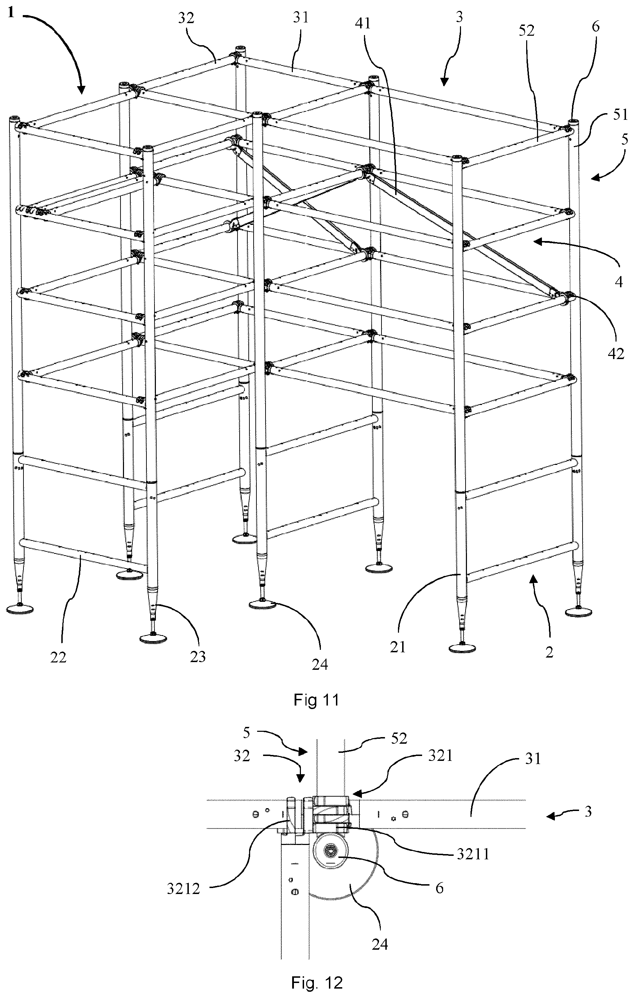

In Fig. 11 ist eine aus dem Möbelbausatz 1 aufgebaute Gestellkonstruktion als dreidimensionale tragende Rohrstruktur gezeigt. Dabei umfasst die Gestellkonstruktion vier Leitern, die jeweils aus einer Bodenleiter 2 und zwei vertikal darauf aufgesteckten Aufbauleitern 5 mit jeweils zwei Sprossen 52 gebildet sind. Die Sprossen 52 der Aufbauleitern 5, welche auf gleicher Höhe liegen, sind jeweils über zwei Traversen 3 miteinander verbunden. Dazu sind die Einrastklauen 32 der Traversen 3 anliegend an die Vertikalstützen 51 der Aufbauleitern 5 an den Sprossen 52 montiert. Gleichzeitig sind mehrere Windverbände 4 diagonal beziehungsweise schräg mit Sprossen 52 auf zwei unterschiedlichen Höhen verbunden.

Durch das Vorsehen der Traversen 3 zusammen mit den Windverbänden 4 an den Leitern 2, 5 ist die Gestellkonstruktion äusserst robust und steif. Insbesondere kann sie auf diese Weise vergleichsweise grosse Lasten aufnehmen. Die oberen Enden der Rohrabschnitte 51 der obersten Aufbauleitern 5 sind mit Deckeln 6 abgedeckt und verschlossen.

Fig. 12 zeigt verschiedene Verbindung der Traversen 3, wie sie in der in Fig. 11 gezeigten Gestellkonstruktion vorgesehen sind. Zwei Traversen 3 sind in einer Linie an der obersten Sprosse 52 der obersten Aufbauleiter 5 nahe dessen Vertikalstütze 51 montiert. Dabei greifen die Einrastklauen 32 ineinander. Insbesondere liegen jeweils die zweiten Umgreiffinger 3212 der Einrastklauen 32 zwischen dem ersten und dem zweiten Umgreiffinger 3211, 3212 der anderen Einrastklaue 32. Da die Umgreifabschnitte 321 in Bezug auf die zentrale Längsachse 33 des Stangenabschnitts 31 versetzt sind, ist eine Ausrichtung der montierten Traversen 3 in einer Linie möglich.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Um die Erfindung nicht zu verklären, können in gewissen Fällen wohlbekannte Strukturen und Techniken nicht im Detail gezeigt und beschrieben sein. Es versteht sich, dass Fachleute Änderungen und Abwandlungen machen können, ohne den Umfang der folgenden Ansprüche zu verlassen. Insbesondere deckt die vorliegende Erfindung weitere Ausführungsbeispiele mit irgendwelchen Kombinationen von Merkmalen ab, die von den explizit beschriebenen Merkmalskombinationen abweichen können.

Die vorliegende Offenbarung umfasst auch Ausführungsformen mit jeglicher Kombination von Merkmalen, die vorstehend oder nachfolgend zu verschiedenen Ausführungsformen genannt oder gezeigt sind. Sie umfasst ebenfalls einzelne Merkmale in den Figuren, auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschliesslich die in den Ansprüchen beziehungsweise in den Ausführungsbeispielen beschriebenen Merkmale umfasst sowie auch solche, die zusätzliche andere Merkmale umfassen.

Im Weiteren schliesst der Ausdruck "umfassen" und Ableitungen davon andere Elemente oder Schritte nicht aus. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder -bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt.

## Patentansprüche

1. Traversensatz mit zumindest zwei Traversen (3) mit jeweils einem längsförmigen Stangenabschnitt (31), einer ersten Einrastklaue (32) und einer zweiten Einrastklaue (32), wobei jeweils
der Stangenabschnitt (31) eine zentrale Längsachse (33), ein erstes Längsende und ein dem ersten Längende im Wesentlichen entgegengesetztes zweites Längsende aufweist,
die erste Einrastklaue (32) am ersten Längsende des Stangenabschnitts (31) und die zweite Einrastklaue (32) am zweiten Längsende des Stangenabschnitts (31) angeordnet sind,
die erste Einrastklaue (32) und die zweite Einrastklaue (32) jeweils
einen korrespondierend zu einem stangenförmigen Element (22, 31, 52) geformten Umgreifabschnitt (321) aufweisen und
dazu ausgebildet sind, werkzeuglos am stangenförmigen Element (22, 31, 52) montiert zu werden, und
der Umgreifabschnitt (321) der ersten Einrastklaue (32) in Bezug auf die zentrale Längsachse (33) des Stangenabschnitts (31) zum Umgreifabschnitt (321) der zweiten Einrastklaue (32) versetzt ist,
wobei die zwei Traversen (3) so an einem einzigen stangenförmigen Element (22, 31, 52) montierbar sind, dass die zentralen Längsachsen (33) der Stangenabschnitte (31) der zwei Traversen (3) auf einer Geraden liegen,
**dadurch gekennzeichnet, dass** die Umgreifabschnitte (321) der ersten Einrastklaue (32) und der zweiten Einrastklaue (32) jeder der zumindest zwei Traversen (3) jeweils zwei beabstandete Umgreiffinger (3211, 3212) aufweisen, die abwechselnd nebeneinander liegen, wenn die zwei Traversen (3) am einzigen stangenförmigen Element (22, 31, 52) montiert sind, sodass immer ein Umgreiffinger einer der Traversen zwischen zwei Umgreiffinger der anderen der Traversen liegt.

2. Traversensatz nach Anspruch 1, wobei bei den zumindest zwei Traversen (3) jeweils
die erste Einrastklaue (32) und die zweite Einrastklaue (32) jeweils mit einem Federelement und einem Schieber (322) ausgestattet sind,
der Schieber (322) zwischen einer Sperrstellung und einer Offenstellung bewegbar ist und
das Federelement den Schieber (322) in die Sperrstellung drückt.

3. Traversensatz nach Anspruch 2, wobei bei den zumindest zwei Traversen (3) jeweils der Schieber (322) der ersten Einrastklaue (32) in Bezug auf die zentrale Längsachse (33) des Stangenabschnitts (31) zum Schieber (322) der zweiten Einrastklaue (32) versetzt ist.

4. Traversensatz nach Anspruch 2 oder 3, wobei bei den zumindest zwei Traversen (3) jeweils die Schieber (322) der ersten Einrastklaue (32) und der zweiten Einrastklaue (32) jeweils eine Betätigungsfläche (323) aufweisen, die gegen das stangenförmige Element (22, 31, 52) drückt, wenn die Einrastklaue (32) am stangenförmigen Element (22, 31, 52) montiert wird, so dass der Schieber (322) entgegen dem Drücken des Federelements in die Offenstellung bewegt wird.

5. Traversensatz nach Anspruch 4, wobei bei den zumindest zwei Traversen (3) jeweils die Umgreifabschnitte der ersten Einrastklaue (32) und der zweiten Einrastklaue (32) jeweils eine Montagerichtung (327) definieren, in die sie zur Montage an das stangenförmige Element (22, 31, 52) zu bewegen sind, und die Betätigungsflächen (323) der Schieber (322) der ersten Einrastklaue (32) und der zweiten Einrastklaue (32) geneigt zur Montagerichtung (327) liegend ausgebildet sind.

6. Traversensatz nach einem der vorangehenden Ansprüche, wobei bei den zumindest zwei Traversen (3) jeweils die Umgreifabschnitte (321) der ersten Einrastklaue (32) und der zweiten Einrastklaue (32) jeweils dazu ausgebildet sind, das stangenförmige Element (22, 31, 52) um mehr als einen Viertel und maximal zur Hälfte zu umgreifen.

7. Traversensatz nach einem der vorangehenden Ansprüche, wobei bei den zumindest zwei Traversen (3) jeweils die Umgreifabschnitte (321) der ersten Einrastklaue (32) und der zweiten Einrastklaue (32) jeweils zwei beabstandete Umgreiffinger (3211, 3212) aufweisen.

8. Möbelbausatz (1) mit
einem Satz Bodenleitern (2), die jeweils zwei über eine obere Sprosse (22) als oberes rohrförmiges Element und eine untere Sprosse (22) als unteres rohrförmiges Element miteinander verbundene Vertikalstützen (21) umfassen, wobei die zwei Vertikalstützen (21) jeweils mit einem Fuss (23) zum Aufstellen auf einen Boden ausgestattet sind,
einem Traversensatz nach einem der vorangehenden Ansprüche, und einem Satz längsförmiger Windverbände (4), die jeweils an ihren Längsenden mit einer Schelle (42) ausgestattet sind, die dazu ausgebildet sind, an einer der Sprossen (22) einer der Bodenleitern (2) montiert zu werden, indem sie die eine der Sprossen (22) umgreift, wobei
wobei die Einrastklauen (32) der zumindest zwei Traversen (3) des Traversensatzes jeweils so ausgebildet sind, dass eine der Sprossen (22) der Bodenleitern (2) beziehungsweise einer der Stangenabschnitte (31) der zumindest zwei Traversen (3) des Traversensatzes das stangenförmige Element (22, 31, 52) ist.

9. Möbelbausatz nach dem vorangehenden Anspruch, bei dem die Stangenabschnitte (31) der zumindest zwei Traversen (3) jeweils so geformt sind, dass die Einrastklauen (32) der zumindest Traversen (3) werkzeuglos an ihm montiert werden können.

## Claims

1. Crossmember set having at least two crossmembers (3) each comprising a longitudinal rod portion (31), a first latching claw (32) and a second latching claw (32), wherein in each case
the rod portion (31) comprises a central longitudinal axis (33), a first longitudinal end and a second longitudinal end substantially opposite the first longitudinal end,
the first latching claw (32) is arranged at the first longitudinal end of the rod portion (31) and the second latching claw (32) is arranged at the second longitudinal end of the rod portion (31),
the first latching claw (32) and the second latching claw (32) each
having a gripping portion (321) shaped to correspond to a rod-shaped element (22, 31, 52) and
being designed to be mounted on the rod-shaped element (22, 31, 52) without tools, and
the gripping portion (321) of the first latching claw (32) being offset from the gripping portion (321) of the second latching claw (32) with respect to the central longitudinal axis (33) of the rod portion (31)
wherein the two crossmembers (3) are mountable on a single rod-shaped element (22, 31, 52) in such a way that the central longitudinal axes (33) of the rod portions (31) of the two crossmembers (3) lie on a straight line,
**characterized in that** the gripping portions (321) of the first latching claw (32) and the second latching claw (32) of each of the two crossmembers (3) each have two spaced-apart gripping fingers (3211, 3212) which lie alternately adjacent to each other when the two crossmembers (3) are mounted on the single rod-shaped element (22, 31, 52) so that a gripping finger of one of the crossmembers is always between two gripping fingers of the other crossmember.

2. Crossmember set according to claim 1, wherein for each of the at least two crossmembers (3)
the first latching claw (32) and the second latching claw (32) are each equipped with a spring element and a slider (322),
the slider (322) is movable between a locked position and an open position and
the spring element presses the slider (322) into the locked position.

3. Crossmember set according to claim 2, wherein for each of the at least two crossmembers (3) the slider (322) of the first latching claw (32) is offset from the slider (322) of the second latching claw (32) with respect to the central longitudinal axis (33) of the rod portion (31).

4. Crossmember set according to claim 2 or 3, wherein for each of the at least two crossmembers (3) the sliders (322) of the first latching claw (32) and the second latching claw (32) each have an actuating surface (323) which presses against the rod-shaped element (22, 31, 52) when the latching claw (32) is mounted on the rod-shaped element (22, 31, 52), so that the slider (322) is moved into the open position against the pressing action of the spring element.

5. Crossmember set according to claim 4, wherein for each of the at least two crossmembers (3) the gripping portions of the first latching claw (32) and the second latching claw (32) each define a mounting direction (327) in which they are to be moved for mounting on the rod-shaped element (22, 31, 52), and the actuating surfaces (323) of the sliders (322) of the first latching claw (32) and the second latching claw (32) are designed to lie inclined to the mounting direction (327).

6. Crossmember set according to any of the preceding claims, wherein for each of the at least two crossmembers (3) the gripping portions (321) of the first latching claw (32) and the second latching claw (32) are each designed to grip the rod-shaped element (22, 31, 52) by more than a quarter and at most by half.

7. Crossmember set according to any of the preceding claims, wherein for each of the at least two crossmembers (3) the gripping portions (321) of the first latching claw (32) and the second latching claw (32) each have two spaced-apart gripping fingers (3211, 3212).

8. Furniture kit (1) comprising
a set of floor ladders (2) which each comprise two vertical supports (21) which are interconnected via an upper rung (22) as an upper tubular element and a lower rung (22) as a lower tubular element, the two vertical supports (21) each being equipped with a foot (23) for placement on a floor,
a crossmember set according to any one of the preceding claims, and
a set of longitudinal wind braces (4) which are each equipped at their longitudinal ends with a clamp (42) which is designed to be mounted on one of the rungs (22) of one of the floor ladders (2) by gripping one of the rungs (22),
the latching claws (32) of the at least two crossmembers (3) of the crossmember set each being designed in such a way that one of the rungs (22) of the floor ladders (2) or one of the rod portions (31) of the at least two crossmembers (3) of the crossmember set is the rod-shaped is element (22, 31, 52).

9. Furniture kit according to the preceding claim, in which the rod portions (31) of the at least two crossmembers (3) are each shaped in such a way that the latching claws (32) of the at least two crossmembers (3) can be mounted thereon without tools.

## Revendications

1. Jeu de traverses comportant au moins deux traverses (3) comportant respectivement un section formant barre (31) de forme longitudinale, une première griffe d'encliquetage (32) et une seconde griffe d'encliquetage (32), dans lequel respectivement
la section formant barre (31) présente un axe longitudinal central (33), une première extrémité longitudinale et une seconde extrémité longitudinale sensiblement opposée à la première extrémité longitudinale,
la première griffe d'encliquetage (32) est disposée à la première extrémité longitudinale de la section formant barre (31) et la seconde griffe d'encliquetage (32) est disposée à la seconde extrémité longitudinale de la section formant barre (31),
la première griffe d'encliquetage (32) et la seconde griffe d'encliquetage (32), respectivement,
présentent une section de saisie (321) formée de manière à correspondre à un élément en forme de barre (22, 31, 52), et
sont réalisées pour être montées sans outil sur l'élément en forme de barre (22, 31, 52), et
la section de saisie (321) de la première griffe d'encliquetage (32) est décalée par rapport à l'axe longitudinal central (33) de la section formant barre (31) par rapport à la section de saisie (321) de la seconde griffe d'encliquetage (32),
dans lequel les deux traverses (3) peuvent être montées sur un élément en forme de barre (22, 31, 52) unique de sorte que les axes longitudinaux centraux (33) des sections formant barres (31) des deux traverses (3) se trouvent sur une ligne droite,
**caractérisé en ce que** les sections de saisie (321) de la première griffe d'encliquetage (32) et de la seconde griffe d'encliquetage (32) de chacune des au moins deux traverses (3) présentent respectivement deux doigts de saisie (3211, 3212) espacés qui se trouvent alternativement de manière adjacente l'un à l'autre lorsque les deux traverses (3) sont montées sur l'élément en forme de barre (22, 31, 52) unique, de sorte qu'un doigt de saisie de l'une des traverses se trouve toujours entre deux doigts de saisie de l'autre des traverses.

2. Jeu de traverses selon la revendication 1, dans lequel, pour les au moins deux traverses (3), respectivement,
la première griffe d'encliquetage (32) et la seconde griffe d'encliquetage (32) sont respectivement pourvues d'un élément formant ressort et d'un coulisseau (322),
le coulisseau (322) peut être déplacé entre une position de blocage et une position d'ouverture, et
l'élément formant ressort pousse le coulisseau (322) dans la position de blocage.

3. Jeu de traverses selon la revendication 2, dans lequel, pour les au moins deux traverses (3), respectivement, le coulisseau (322) de la première griffe d'encliquetage (32) est décalé par rapport à l'axe longitudinal central (33) de la section formant barre (31) par rapport au coulisseau (322) de la seconde griffe d'encliquetage (32).

4. Jeu de traverses selon la revendication 2 ou 3, dans lequel, dans les au moins deux traverses (3), respectivement, les coulisseaux (322) de la première griffe d'encliquetage (32) et de la seconde griffe d'encliquetage (32) présentent respectivement une surface d'actionnement (323) qui effectue une poussée contre l'élément en forme de barre (22, 31, 52) lorsque la griffe d'encliquetage (32) est montée sur l'élément en forme de barre (22, 31, 52), de sorte que le coulisseau (322) est déplacé vers la position d'ouverture sous la poussée de l'élément formant ressort.

5. Jeu de traverses selon la revendication 4, dans lequel, pour les au moins deux traverses (3), respectivement, les sections de saisie de la première griffe d'encliquetage (32) et de la seconde griffe d'encliquetage (32) définissent respectivement une direction de montage (327) dans laquelle elles doivent être déplacées pour le montage sur l'élément en forme de barre (22, 31, 52), et les surfaces d'actionnement (323) des coulisseaux (322) de la première griffe d'encliquetage (32) et de la seconde griffe d'encliquetage (32) sont réalisées de manière à être posées de manière inclinée par rapport à la direction de montage (327).

6. Jeu de traverses selon l'une des revendications précédentes, dans lequel, pour les au moins deux traverses (3), respectivement, les sections de saisie (321) de la première griffe d'encliquetage (32) et de la seconde griffe d'encliquetage (32) sont respectivement conçues pour saisir l'élément en forme de barre (22, 31, 52) sur plus d'un quart et au maximum sur la moitié.

7. Jeu de traverses selon l'une des revendications précédentes, dans lequel, pour les au moins deux traverses (3), respectivement, les sections de saisie (321) de la première griffe d'encliquetage (32) et de la seconde griffe d'encliquetage (32) présentent respectivement deux doigts de saisie (3211, 3212) espacés.

8. Meuble en kit (1) comportant
un jeu d'échelles pour plancher (2) qui comprennent respectivement deux supports verticaux (21) reliés entre eux par l'intermédiaire d'un barreau supérieur (22) en tant qu'élément tubulaire supérieur et d'un barreau inférieur (22) en tant qu'élément tubulaire inférieur, dans lequel les deux supports verticaux (21) sont respectivement pourvus d'un pied (23) pour le positionnement sur un plancher,
un jeu de traverses selon l'une des revendications précédentes, et
un jeu de contreventements (4) allongés respectivement pourvus d'une attache (42) à leurs extrémités longitudinales, laquelle attache est réalisée pour être montée sur l'un des barreaux (22) de l'une des échelles pour plancher (2) en saisissant le barreau (22), dans lequel
dans lequel les griffes d'encliquetage (32) des au moins deux traverses (3) du jeu de traverses sont respectivement réalisées de sorte que l'un des barreaux (22) des échelles pour plancher (2) ou l'une des sections formant barres (31) des au moins deux traverses (3) du jeu de traverses est l'élément en forme de barre (22, 31, 52).

9. Meuble en kit selon la revendication précédente, dans lequel les sections formant barres (31) des au moins deux traverses (3) sont respectivement formées de sorte que les griffes d'encliquetage (32) des au moins traverses (3) peuvent être montées sur celui-ci sans outil.
